# EUROPEAN PATENT SPECIFICATION

(11) **EP 2 296 354 B1**
(45) Date of publication and mention of the grant of the patent: **14.10.2015**
(21) Application number: 10001048.7
(22) Date of filing: 02.02.2010
(51) Int. Cl.: H04M 1/02, H04M 1/18

(54) **Handheld electronic device**
Tragbare elektronische Vorrichtung
Dispositif électronique portable

(30) Priority: 11.09.2009 TW 98130802
(43) Date of publication of application: 16.03.2011
(73) Proprietor: HTC Corporation, Taoyuan City 330 (TW)
(72) Inventor: Lee, Ying-Xing, Taoyuan City Taoyuan County 330 (TW); Huang, Chien-Wei, Taoyuan City Taoyuan County 330 (TW); Chuang, I-Cheng, Taoyuan City Taoyuan County 330 (TW)
(74) Representative: Emde, Eric

(56) References cited:
- EP-A1- 2 009 972
- EP-A2- 1 531 604
- EP-A2- 1 906 631
- US-A1- 2006 178 176
- US-A1- 2009 116 200
- US-A1- 2009 147 451
- US-A1- 2009 147 453
- US-A1- 2009 147 484
- US-A1- 2009 181 734

## Description

### BACKGROUND OF THE INVENTION

### Field of the Invention

The present application relates to an electronic device, and more particularly, to a handheld electronic device.

### Description of Related Art

With an advancement of the technology, human beings tend to rely on electronic device to a greater degree. To meet the requirement of a light, thin, compact and high performance handheld electronic device, various handheld electronic device, such as ultra mobile personal computer (UMPC), tablet PC, pocket PC, personal digital assistant (PDA) and cell phone, are provided.

Conventional handheld electronic devices usually adopt a clamshell-type design or a sliding-type design. Regarding to the sliding-type design, a display screen and a keyboard are respectively disposed on the two stacked bodies for users to operate, wherein a flexible printed circuit (FPC) is used to electrically connect the two bodies.

The existing design forms openings on the bodies or the sliding module to make the flexible printed circuit move smoothly between the bodies. However, since the flexible printed circuit is connected between the two bodies, the two bodies should maintain stacked partly with each other to protect the flexible printed circuit spread from a retracting state. In other words, available space of the conventional handheld electronic device is limited due to the restriction of the spreading area of the two bodies, and accordingly the structural design of the handheld electronic device is also restricted.

On the other hand, increasing the spreading area of the two bodies causes the opening being enlarged and the flexible printed circuit being exposed and affects the exterior design of the handheld electronic device. In addition, the flexible printed circuit may be pulled out in using and the reliability is reduced.

US 2009/0147453 A1 was used as a basis for the preamble of claim 1 and discloses a sliding mechanism, wherein the sliding mechanism movably connects to a display module and an input module of an electronic device. The sliding mechanism includes a first member, a second member, a connection member, and a cover movably disposed on the first member. The first member is movable with respect to the second member and has an opening. A flexible printed circuit (FPC) of the electronic device is disposed through the opening and electronically connects to the display module and the input module. The connection member connects the first and second members at opposite sides thereof, and a middle portion of the connection member connects to the cover. When the first member slides with respect to the second member in a first direction, the connection member impels the cover to block a part of the opening.

US 2009/0116200 A1 discloses an electronic device which comprises a first module, a second module, a flexible printed circuit board, a first protecting cover and a second protecting cover. The first module comprises a bottom plate. The second module is disposed below the first module and comprises a top plate. The flexible printed circuit board connects the first module and the second module. The first protecting cover is disposed below the top plate. The second protecting cover is disposed below the top plate, wherein an end of the second protecting cover is fixed on the bottom plate. When the first module slides relative to the second module from a first position to a second position, the bottom plate forces the second protecting cover to change from a closed state to an opened state to totally cover the flexible printed circuit board.

EP 1 531 604 A2 discloses a sliding/hinge apparatus for sliding/rotating type mobile terminals, which can be slid and rotated from a body housing of the sliding/rotating type mobile terminal. The sliding/rotating type mobile terminal includes a body housing and a slide housing slidably mounted on the body housing. The apparatus comprises first and second hinge frames mounted in the body housing by means of screws, first and second plates, one or more slide bars, and a coupling unit inserted through the center parts of the first and second hinge frames so that the first and second hinge frames are rotatably coupled with each other while being opposite to each other.

US 2009/181734 A1 discloses a slide mechanism of a portable equipment and a portable equipment using the same. The slide device and the portable equipment are equipped with a base member mounted on either one of a first casing and a second casing being components of a portable equipment, a slider member slidably mounted on either other one of the first casing and the second casing, and urging means provided between the slider member and the base member for slidably urging the base member and the slider member in a closing and/or an opening direction, and a slide engagement portion includes a plurality of guide rail portions provided on the slider member, a guide long hole provided outside a plurality of the guide rail portions on the slider member and extending in a slide direction, engagement portions provided on the base member and respectively engaged with each of the guide rail portions, and a slide guide portion engaged with the guide long hole.

EP 1 906 631 A2 discloses a sliding-type portable communication terminal and a semi-automatic sliding device for the portable communication terminal. The portable terminal has a body housing, a sliding housing sliding on the body housing, and a sliding device for semi-automatically moving the sliding housing with respect to the body housing. The sliding device includes a first member, a second member moving in a desired direction with respect to the first member while facing the first member, and an elastic body coupled between the first and second members. The elastic member functions as a semi-automatic driving source for driving the second member in the desired direction.

US 2006/178176 A1 discloses a terminal which includes a lower housing; an upper housing slidably installed with respect to the lower housing; and a pressing member with both ends being supported by the lower and upper housings, respectively, for providing variable levels of pressure in diverse directions according to a sliding position of the upper housing with respect to the lower housing, wherein one end of the pressing member is movably linked to the lower housing. The small-sized pressing member provides a maximum level of pressure to facilitate the sliding movement of the upper housing with respect to the lower housing.

### SUMMARY OF THE INVENTION

The present application provides a handheld electronic apparatus for larger spreading area, artistic exterior design, and superior reliability.

A handheld electronic device in accordance with the present invention is provided as set forth in claim 1. Preferred embodiments of the present invention may be gathered from the dependent claims.

Accordingly, in the above embodiment of the invention, the part of the opening exposed after the handheld electronic device is spread is covered by the shielding member to protect the flexible electrical connecting member in the handheld electronic device, which permits the two bodies of the handheld electronic device providing larger spreading area, providing artistic exterior design, and improving reliability.

In order to make the aforementioned and other features and advantages of the invention more comprehensible, embodiments accompanying figures are described in detail below.

### BRIEF DESCRIPTION OF THE DRAWINGS

The accompanying drawings are included to provide a further understanding of the invention and are incorporated in and constitute a part of this specification. The drawings illustrate embodiments of the invention and, together with the description, serve to explain the principles of the invention.

Fig. 1A is a schematic drawing showing a handheld electronic device in a retracting state according to an embodiment of the present invention.

Fig. 1B is a schematic drawing showing the handheld electronic device of Fig. 1A in a spreading state.

Fig. 2 is an exploded diagram of a part of components of the handheld electronic device of Fig. 1A.

Fig. 3 is an assembled diagram of the part of components of the handheld electronic device of Fig. 2.

Figs. 4A and 4B are cross-sectional views of the handheld electronic device of Figs. 1A and 1B.

Figs. 5A and 5B are schematic drawings respectively showing the operation of a sliding module according to an embodiment of the present invention.

### DESCRIPTION OF EMBODIMENTS

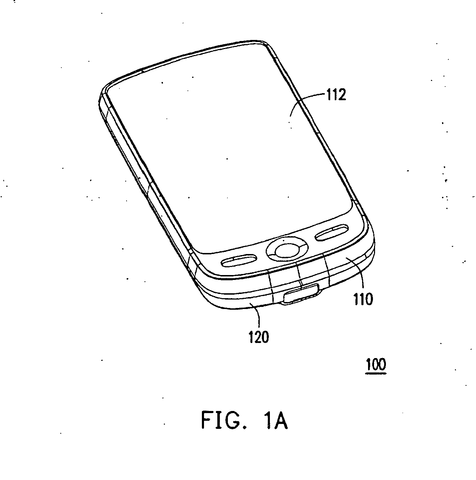

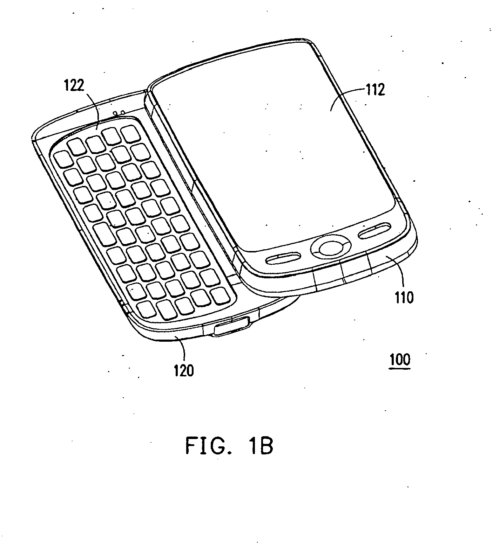

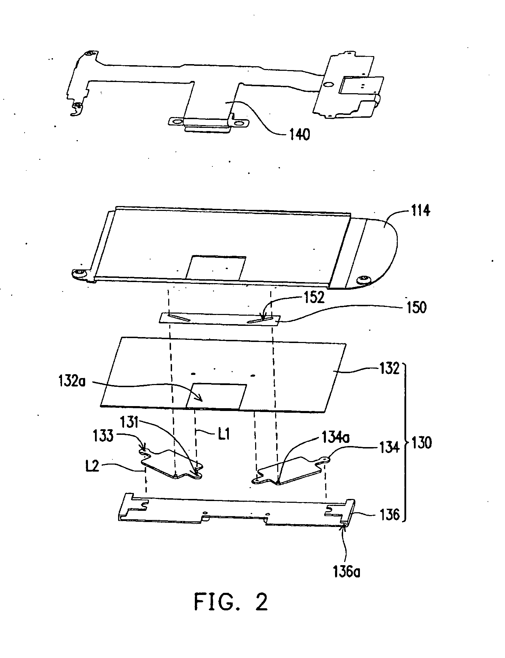

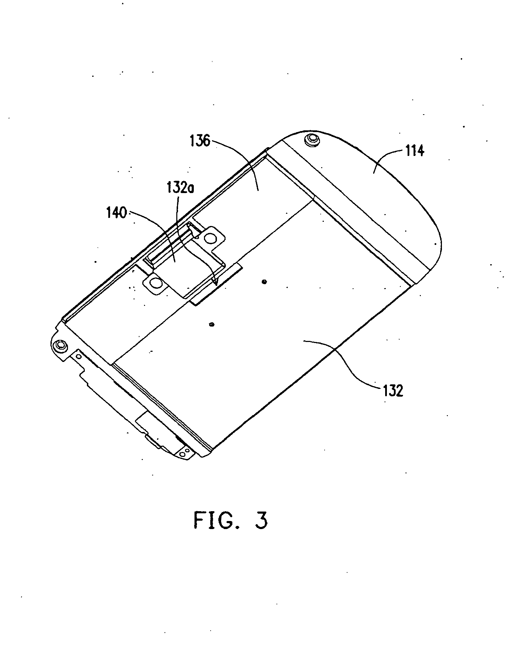

Fig. 1A is a schematic drawing showing a handheld electronic device in a retracting state according to an embodiment of the present invention. Fig. 1B is a schematic drawing showing the handheld electronic device of Fig. 1A in a spreading state. Fig. 2 is an exploded diagram of a part of components of the handheld electronic device of Fig. 1A. Fig. 3 is an assembled diagram of the part of components of the handheld electronic device of Fig. 2. Referring to Figs. 1A, 1B and 2, in the present embodiment, the handheld electronic device 100 includes a first body 110, a second body 120, a sliding module 130 and a flexible electrical connecting member 140. In this embodiment, the first body 110 has a display interface 112, such as a display screen, and the second body 120 has an input interface 122, such as a keyboard.

Referring to Figs 2 and 3, in this embodiment, the first body 110 includes a metal plate 114, and the sliding module 130 is dispose between the metal plate 114 and the second body 120, so that the first body 110 and the second body 120 can be transformed between the retracting state of Fig. 1A and the spreading state of Fig. 1B. When the first body 110 and the second body 120 are in the retracting state, the input interface 122 is covered by the first body 110. Otherwise, when the first body 110 and the second body 120 are in the spreading state, the input interface 122 is exposed outside the first body 110 and the second body 120.

The sliding module 130 includes a sliding member 132, a fixing member 136 and one or more driving members 134. This embodiment takes two driving members 134 as an example. The fixing member 136 is disposed on the second body 120, and the sliding member 132 is disposed on the first body 110 and slidably coupled to the fixing member 136, wherein the sliding member 132 has an opening 132a. Specifically, the fixing member 136 has a pair of sliding slots 136a, and two opposite edges of the sliding member 132 are slidably engaged in the pair of sliding slots 136a. The flexible electrical connecting member 140 is for example a flexible printed circuit board, passing through the opening 132a and being connected between the first body 110 and the second body 120. The driving members 134 are connected between the fixing member 136 and the sliding member 132.

When the first body 110 and the second body 120 configure in the spreading state, a part of the opening 132a is exposed, and accordingly the flexible electrical connecting member 140 is also exposed via the exposed part of the opening 132a.

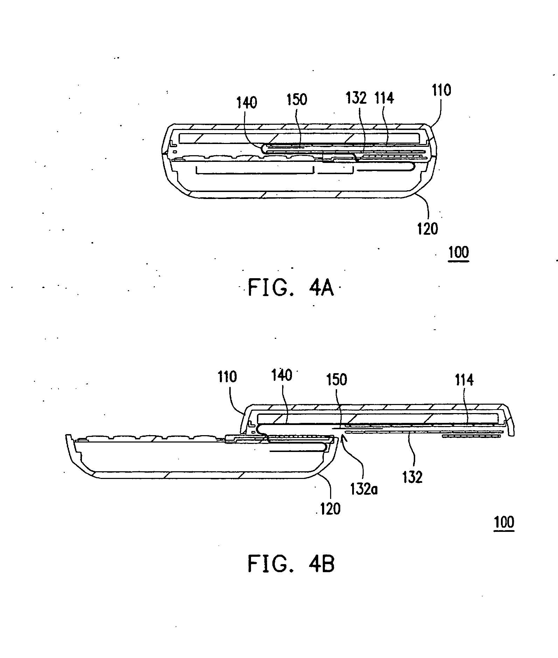

Figs. 4A and 4B are cross-sectional views of the handheld electronic device of Figs. 1A and 1B. Referring to Figs 2, 4A and 4B, the handheld electronic device 100 further includes a shielding member 150 coupled to the driving members 134. When the first body 110 and the second body 120 are transformed from the retracting state to the spreading state, the driving member 134 drives the shielding member 150 sliding with respect to the sliding member 132 to shield the part of the opening 132a.

In view of the above, the shielding member 150 is capable of providing superior protection and shielding effect to the flexible electrical connecting member 140 which may be exposed during the operation process of the handheld electronic device 100, and therefore improves artistic exterior design and reliability of the handheld electronic device 100. Furthermore, the above design permits larger spreading area of the first body 110 and the second body 120, and thereby more available space of the handheld electronic device 100 is released.

In this embodiment, the driving members 134 are, for example, a plurality of elastic modules. By which, when the first body 110 is driven by an external force to slide with respect to the second body 120, the driving members 134 provides a driving force to semi-automatically push the first body 110 away from the second body 120, or semi-automatically draw the first body 110 back to the second body 120 to achieve the retracting state.

In this embodiment, each driving member 134 has a guiding pin 134a, and the shielding member 150 is provided with sliding slots 152 corresponding to the guiding pins 134a, wherein the guiding pins 134a are slidably disposed in the sliding slots 152. When the sliding member 132 slides with respect to the fixing member 136, the shielding member 150 is driven to move with respect to the sliding member 132 by the coupling of the sliding slots 152 and the guiding pins 134a.

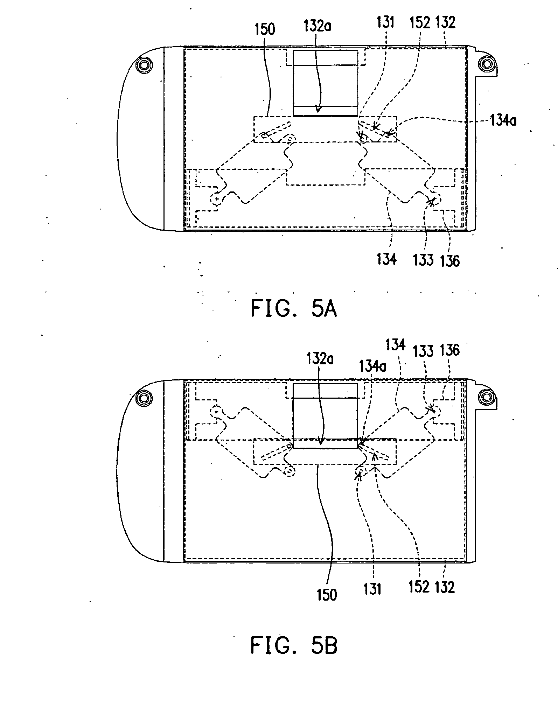

Figs. 5A and 5B are schematic drawings respectively showing the operation of a sliding module according to an embodiment of the present invention. Referring to Figs. 2, 4A, 4B, 5A and 5B, it is noted that each of the driving members 134 has a first end 131 and a second end 133. The first end 131 is pivoted on the sliding member 132 along a first axis L1. The second end 133 is pivoted on the fixing member 136 along a second axis L2. In addition, a projection of each guiding pin 134a perpendicularly projected to a straight line passing through the corresponding first axis L1 and the second axis L2 is situated between the first axis L1 and the second axis L2. Therefore, the driving members 134 drive the shielding member 150 moving when the sliding member 132 slides with respect to the fixing member 136.

In summary, the handheld electronic device is provided with a movable shielding member, which is capable of shielding the exposed flexible electrical connecting member when the handheld electronic device is in a spread state, and thereby provides superior protection to the flexible electrical connecting member and improves artistic exterior design and reliability of the handheld electronic device.

On the other hand, the movable shielding member provides shielding effect to the flexible electrical connecting member so as to resolve the problem that the flexible electrical connecting member is exposed as excessively spreading the two bodied of the handheld electronic device. Therefore, more available design space of the handheld electronic device is released and higher design flexibility is provided.

Although the invention has been described with reference to the above embodiments, it will be apparent to one of the ordinary skill in the art that modifications to the described embodiment may be made without departing from the scope of the invention as defined by the attached claims.

## Claims

1. A handheld electronic device(100), comprising:
a first body (110);
a second body (120);
a sliding module (130), disposed between the first and second bodies (110, 120) for driving the first body (110) and the second body (120) transforming between a retracted state and a spreaded state, the sliding module (130) comprising:
a sliding member (132), disposed on the first body (110), wherein the sliding member (132) has an opening (132a), and when the first body (110) and the second body (120) are configured in the spread state, a part of the opening (132a) is exposed;
a fixing member (136), disposed on the second body (120), wherein the sliding member (132) is slidably coupled to the fixing member (136);
a driving member (134), connected between the fixing member (136) and
the sliding member (132);
a flexible electrical connecting member (140), passing through the opening (132a) and connected between the first body (110) and the second body (120); and
a shielding member (150), coupled to the driving member (134), wherein the driving member (134) is arranged for driving the shielding member (150), wherein the shielding member (150), when driven by the driving member (134), is arranged to slide with respect to the sliding member (132), wherein when the shielding member (150) is sliding with respect to the sliding member (132), the shielding member (150) is adapted to shield the part of the opening (132a) when the first body (110) and the second body (120) are transformed from the retracted state to the spread state;
**characterized in that**
the driving member (134) is an elastic module adapted to semi-automatically push the first body (110) away from the second body (120) to achieve the spread state and semi-automatically draw the first body (110) back to the second body (120) to achieve the retracted state, and
the driving member (134) has a guiding pin (134a), the shielding member (150) has a sliding slot (152), and the guiding pin (134a) is slidably disposed in the sliding slot (152).

2. The handheld electronic device as claimed in claim 1, wherein the handheld electronic device (100) comprises at least two driving members (134) each having a guiding pin (134a), the shielding member (150) has a pair of sliding slots (152), and the guiding pins (134a) are slidably coupled to the sliding slots (152).

3. The handheld electronic device as claimed in claim 1, wherein the driving member (134) has a first end (131) and a second end (133), the first end (131) is arranged for being pivoted on the sliding member (132) along a first axis (L1), the second end (133) is arranged for being pivoted on the fixing member (136) along a second axis (L2), and a projection of the guiding pin (134a) perpendicularly projected to a straight line passing through the first axis (L1) and the second axis (L2) is situated between the first axis (L1) and the second axis (L2).

4. The handheld electronic device as claimed in claim 1, wherein the flexible electrical connecting member (140) comprises a flexible printed circuit board.

5. The handheld electronic device as claimed in claim 1, wherein the first body (110) comprises a display interface (112).

6. The handheld electronic device as claimed in claim 1, wherein the second body (120) comprises an input interface (122), wherein when the first body (110) and the second body (120) are configured in the retracted state, the input interface (122) is covered by the first body (110), and when the first body (110) and the second body (120) are configured in the spread state, the input interface (122) is exposed to the outside of the first body (110) and the second body (120).

## Patentansprüche

1. Eine in der Hand zu haltende bzw. tragbare elektronische Einrichtung (100), die Folgendes aufweist:
einen ersten Körper (110);
einen zweiten Körper (120);
ein Verschiebemodul (130), das zwischen den ersten und zweiten Körpern (110, 120) angeordnet ist, zum Bewegen des ersten Körpers (110) und des zweiten Körpers (120) bei der Überführung zwischen einem zusammengeschobenen bzw. eingefahrenen Zustand und einem auseinander geschobenen bzw. ausgefahrenen Zustand, wobei das Verschiebemodul (130) Folgendes aufweist:
ein Verschiebeglied (132), das auf dem ersten Körper (110) angeordnet ist, wobei das Verschiebeglied (132) eine Öffnung (132a) hat, und wobei wenn der erste Körper (110) und der zweite Körper (120) in dem ausgefahrenen Zustand konfiguriert sind, ein Teil der Öffnung (132a) freigelegt ist;
ein Fixierglied (136), das auf dem zweiten Körper (120) angeordnet ist, wobei das Verschiebeglied (132) auf verschiebbare bzw. gleitende Weise an das Fixierglied (136) gekoppelt ist;
ein Antriebs- bzw. Bewegungsglied (134), das zwischen dem Fixierglied (136) und dem Verschiebeglied (132) angeschlossen bzw. angeordnet ist;
ein flexibles, elektrisches Verbindungsglied (140), das durch die Öffnung (132a) hindurch läuft und zwischen dem ersten Körper (110) und dem zweiten Körper (120) angeschlossen ist; und
ein Abschirmglied (150), das an das Bewegungsglied (134) gekoppelt ist, wobei das Bewegungsglied (134) angeordnet ist, um das Abschirmglied (150) zu bewegen, wobei das Abschirmglied (150), wenn es von dem Bewegungsglied (134) bewegt wird, angeordnet ist, um sich in Bezug auf das Verschiebeglied (132) zu bewegen, wobei wenn das Abschirmglied (150) in Bezug auf das Verschiebeglied (132) verschoben wird, das Abschirmglied (150) ausgelegt ist, den Teil der Öffnung (132a) abzuschirmen, wenn der erste Körper (110) und der zweite Körper (120) aus dem eingefahrenen Zustand in den ausgefahrenen Zustand überführt werden;
**dadurch gekennzeichnet, dass**
das Bewegungsglied (134) ein elastisches Modul ist, das ausgelegt ist, um halbautomatisch den ersten Körper (110) von dem zweiten Körper (120) wegzudrücken, um den ausgefahrenen Zustand zu erreichen und halbautomatisch den ersten Körper (110) zurück zu dem zweiten Körper (120) zu ziehen, um den eingefahrenen Zustand zu erreichen, und
das Bewegungsglied (134) einen Führungsstift (134a) hat, das Abschirmglied (150) einen Gleitschlitz (152) hat und der Führungsstift (134a) verschiebbar in dem Gleitschlitz (152) angeordnet ist.

2. In der Hand zu haltende bzw. tragbare Elektronikeinrichtung nach Anspruch 1, wobei die tragbare Elektronikeinrichtung (100) wenigstens zwei Bewegungsglieder (134) aufweist, von denen jedes einen Führungsstift (134a) aufweist, wobei das Abschirmglied (150) ein Paar von Gleitschlitzen (152) hat, und wobei die Führungsstifte (134a) auf verschiebbare Weise an die Gleitschlitze (152) gekoppelt sind.

3. Tragbare Elektronikeinrichtung nach Anspruch 1, wobei das Bewegungsglied (134) ein erstes Ende (131) und ein zweites Ende (133) hat, wobei das erste Ende (131) angeordnet ist, so dass es auf dem Verschiebeglied (132) entlang einer ersten Achse (L1) gedreht wird, wobei das zweite Ende (133) angeordnet ist, so dass es auf dem Fixierglied (136) entlang einer zweiten Achse (L2) gedreht wird, und wobei eine Projektion des Führungsstiftes (134a), die senkrecht zu einer geraden Linie projiziert wird, die durch die erste Achse (L1) und die zweite Achse (L2) verläuft, zwischen der ersten Achse (L1) und der zweiten Achse (L2) angeordnet ist.

4. Tragbare Einrichtung nach Anspruch 1, wobei das flexible, elektrische Verbindungsglied (140) eine flexible gedruckte Leiterplatte aufweist.

5. Tragbare Einrichtung nach Anspruch 1, wobei der erste Körper (110) eine Anzeigeschnittstelle (112) aufweist.

6. Tragbare Einrichtung nach Anspruch 1, wobei der zweite Körper (120) eine Eingabeschnittstelle (122) aufweist, wobei, wenn der erste Körper (110) und der zweite Körper (120) in den eingefahrenen Zustand konfiguriert sind, die Eingabeschnittstelle (122) von dem ersten Körper (110) abgedeckt ist, und wenn der erste Körper (110) und der zweite Körper (120) in den ausgefahrenen Zustand konfiguriert sind, die Eingabeschnittstelle (122) zur Umgebung bzw. zum Äußeren des ersten Körpers (110) und des zweiten Körpers (120) hin freigelegt ist.

## Revendications

1. Dispositif électronique portable (100), comprenant :
un premier corps (110) ;
un second corps (120) ;
un module coulissant (130), disposé entre les premier et second corps (110,120) pour entraîner le premier corps (110) et le second corps (120) à passer d'un état rétracté à un état étendu, le module coulissant (130) comprenant :
un élément coulissant (132), disposé sur le premier corps (110), dans lequel l'élément coulissant (132) présente une ouverture (132a), et, lorsque le premier corps (110) et le second corps (120) sont configurés à l'état étendu, une partie de l'ouverture (132a) est apparente ;
un élément de fixation (136), disposé sur le second corps (120), dans lequel l'élément coulissant (132) est couplé de manière coulissante à l'élément de fixation (136) ;
un élément d'entraînement (134), connecté entre l'élément de fixation (136) et l'élément coulissant (132) ;
un élément de connexion électrique souple (140), traversant l'ouverture (132a) et connecté entre le premier corps (110) et le second corps (120) ; et
un élément de protection (150), couplé à l'élément d'entraînement (134), dans lequel l'élément d'entraînement (134) est agencé pour entraîner l'élément de protection (150), dans lequel l'élément de protection (150), lorsqu'il est entraîné par l'élément d'entraînement (134), est agencé pour coulisser par rapport à l'élément coulissant (132), dans lequel lorsque l'élément de protection (150) coulisse par rapport à l'élément coulissant (132), l'élément de protection (150) est adapté pour protéger la partie de l'ouverture (132a) lorsque le premier corps (110) et le second corps (120) passent de l'état rétracté à l'état étendu ;
**caractérisé en ce que**
l'élément d'entraînement (134) est un module élastique adapté pour écarter de manière semi-automatique le premier corps (110) du second corps (120) pour atteindre l'état étendu et pour rapprocher de manière semi-automatique le premier corps (110) du second corps (120) pour atteindre l'état rétracté, et
l'élément d'entraînement (134) présente une tige de guidage (134a), l'élément de protection (150) présentant une fente de glissement (152), et la tige de guidage (134a) étant disposé de manière à pouvoir coulisser dans la fente de glissement (152).

2. Dispositif électronique portable selon la revendication 1, dans lequel le dispositif électronique portable (100) comprend au moins deux éléments d'entraînement (134) possédant chacun une tige de guidage (134a), l'élément de protection (150) possédant une paire de fentes de glissement (152), et les tiges de guidage (134a) étant couplées de manière à pouvoir coulisser dans les fentes de glissement (152).

3. Dispositif électronique portable selon la revendication 1, dans lequel l'élément d'entraînement (134) possède une première extrémité (131) et une seconde extrémité (133), la première extrémité (131) étant agencée de manière à pivoter sur l'élément coulissant (132) le long d'un premier axe (L1), la seconde extrémité (133) étant agencée de manière à pivoter sur l'élément de fixation (136) le long d'un second axe (L2), et une projection de la tige de guidage (134a) étant projetée perpendiculairement à une ligne droite traversant le premier axe (L1) et le second axe (L2) est située entre le premier axe (L1) et le second axe (L2).

4. Dispositif électronique portable selon la revendication 1, dans lequel l'élément de connexion électrique souple (140) comprend une carte de circuit imprimé souple.

5. Dispositif électronique portable selon la revendication 1, dans lequel le premier corps (110) comprend une interface d'affichage (112).

6. Dispositif électronique portable selon la revendication 1, dans lequel le second corps (120) comprend une interface d'entrée (122), dans laquelle lorsque le premier corps (110) et le second corps (120) sont configurés à l'état rétracté, l'interface d'entrée (122) est recouverte par le premier corps (110), et lorsque le premier corps (110) et le second corps (120) sont configurés à l'état étendu, l'interface d'entrée (122) est apparent à l'extérieur du premier corps (110) et du second corps (120).
